# EUROPEAN PATENT APPLICATION

(11) **EP 4 803 891 A1**
(43) Date of publication of application: **09.09.2026**
(21) Application number: 25879552.5
(22) Date of filing: 17.07.2025
(51) Int. Cl.: G01N 23/223, G01N 23/2204

(54) **FLUORESCENT X-RAY ANALYSIS SYSTEM, INFORMATION STORAGE MEDIUM, LIQUID SAMPLE CELL USED FOR FLUORESCENT X-RAY ANALYSIS SYSTEM, AND FLUORESCENT X-RAY ANALYSIS PROGRAM**

(30) Priority: 15.10.2024 JP 2024180313
(71) Applicant: Rigaku Corporation, Akishima-shi Tokyo 196-8666 (JP)
(72) Inventor: HARA, Shinya, Takatsuki-shi, Osaka 569-1146 (JP); OKAZAKI, Natsumi, Takatsuki-shi, Osaka 569-1146 (JP); YAMADA, Yasujiro, Takatsuki-shi, Osaka 569-1146 (JP)
(74) Representative: Lambacher, Michael
(86) International application number: PCT/JP2025/025556
(87) International publication number: WO 2026/083665

(57) **Abstract**

In order to simultaneously achieve suppression of an increase in manufacturing cost and a reduction in influence from precipitation of a sedimentary component on a measurement result, provided is an X-ray fluorescence spectrometric system including a rotation mechanism for rotating a sample cell and a speed control module for controlling a rotation speed of the rotation mechanism. The X-ray fluorescence spectrometric system operates in operation modes including an unstirred measurement mode and a stirred measurement mode. In the unstirred measurement mode, a detector executes measurement during rotation of the rotation mechanism at a constant speed under control of the speed control module. The stirred measurement mode includes a stirring period in which a liquid sample is stirred through rotation of the rotation mechanism at a varying rotation speed which is caused by the speed control module, and a post-stirring measurement period in which the detector executes measurement after the liquid sample is stirred. A liquid sample cell contains the liquid sample and includes a portion in which a cross-section of a containing space parallel to a lower surface is not a circle centered about a rotation axis of the sample cell.

## Description

### Technical Field

The present invention relates to an X-ray fluorescence spectrometric system, an information storage medium, a liquid sample cell for use in an X-ray fluorescence spectrometric system, and an X-ray fluorescence spectrometric program.

### Background Art

There has been known an X-ray fluorescence spectrometer as an apparatus for measuring an element contained in a sample, or a concentration of the element. The X-ray fluorescence spectrometer can perform analysis irrespective of whether a sample to be analyzed is a solid or a liquid.

In analysis of a solid sample, surface roughness of the solid sample may cause incorrect analysis. There is an X-ray fluorescence spectrometer that rotates a sample in a plane during measurement in order to reduce influence from the surface roughness.

In analysis of a liquid sample, a sedimentary component in the sample precipitates and consequently changes a measurement result over time in some cases. There is an X-ray fluorescence spectrometer that provides a stirring blade inside a sample cell and rotates the stirring blade in the sample cell in order to prevent a sedimentary component from precipitating during measurement (see Patent Literature 1 and Patent Literature 2 listed below).

There are also an X-ray diffractometer and a spectrophotometer that rotate a sample holder filled with a liquid sample itself before measurement is executed (see Patent Literature 3 and Patent Literature 4).

### Citation List

### Patent Literature

[PTL 1] JP 52-046791 U
[PTL 2] JP 53-009558 B
[PTL 3] JP 10-38772 A
[PTL 4] JP 2009-128043 A

### Summary of Invention

### Technical Problem

When a stirring blade is provided inside a sample cell as in Patent Literature 1 and Patent Literature 2, a mechanism for rotating the stirring blade is required to be provided separately, and a manufacturing cost accordingly increases. In particular, when the stirring blade is rotated with use of a magnetic force, a ferromagnetic substance contained in the stirring blade affects a measurement result in some cases.

In the case of the configuration that rotates a sample cell itself as well, a liquid sample may not be stirred sufficiently in a cylindrically shaped sample cell as in Patent Literature 3 and Patent Literature 4.

The present disclosure has been made in view of the problems described above, and an object of the present disclosure is to provide an X-ray fluorescence spectrometric system, an information storage medium, a liquid sample cell for use in an X-ray fluorescence spectrometric system, and an X-ray fluorescence spectrometric program with which suppression of an increase in manufacturing cost and a reduction in influence from precipitation of a sedimentary component on a measurement result are achieved by using a rotation mechanism for reducing influence from surface roughness of a solid sample and by thoroughly stirring a liquid sample, respectively.

### Solution to Problem

(1) According to one aspect of the present disclosure, there is provided an X-ray fluorescence spectrometric system including: a sample stage on which a sample cell is to be placed and which has an opening for exposing a lower surface of the sample cell, the sample cell having a containing space in which a sample is to be contained; a rotation mechanism configured to rotate the sample cell placed on the sample stage; an X-ray source configured to, from under the sample stage, irradiate the lower surface with X-rays through the opening in the sample stage; a detector configured to measure an intensity of fluorescent X-rays emitted from the sample; and a speed control module configured to control a rotation speed of the rotation mechanism, wherein the sample cell includes: a liquid sample cell in which a liquid sample is to be contained, and which includes a portion in which a cross-section of the containing space parallel to the lower surface is other than a circle centered about a rotation axis of the sample cell; and a solid sample cell configured to contain a solid sample, and wherein the X-ray fluorescence spectrometric system is configured to operate in operation modes including: an unstirred measurement mode in which the detector executes measurement during rotation of the rotation mechanism at a constant rotation speed under control of the speed control module; and a stirred measurement mode including a stirring period in which the liquid sample is stirred through rotation of the rotation mechanism at a varying rotation speed which is determined by the speed control module, and a post-stirring measurement period in which the detector executes measurement after the liquid sample is stirred.
(2) In the X-ray fluorescence spectrometric system according to another aspect of the present disclosure, the sample stage is designed so that the liquid sample cell and the solid sample cell are placeable thereon, in the unstirred measurement mode, the solid sample cell is placed on the sample stage, and, in the stirred measurement mode, the liquid sample cell is placed on the sample stage.
(3) In the X-ray fluorescence spectrometric system according to another aspect of the present disclosure, the containing space of the liquid sample cell has a substantially cylindrical shape, and the liquid sample cell includes one or more fins each having predetermined lengths in a radial direction of the containing space and a rotation axis direction.
(4) In the X-ray fluorescence spectrometric system according to another aspect of the present disclosure, the liquid sample cell includes a cylindrical portion having an upper surface that is an opening, and a lid portion to be fitted into the opening, and each of the one or more fins is formed integrally with the lid portion.
(5) In the X-ray fluorescence spectrometric system according to another aspect of the present disclosure, the liquid sample cell includes a cylindrical portion having an upper surface that is an opening, and each of the one or more fins is formed integrally with the cylindrical portion.
(6) In the X-ray fluorescence spectrometric system according to another aspect of the present disclosure, the liquid sample cell includes a cylindrical portion having an upper surface that is an opening, the cylindrical portion and the one or more fins are formed separately from each other, and each of the one or more fins is fitted into the cylindrical portion.
(7) In the X-ray fluorescence spectrometric system according to another one aspect of the present disclosure, the cylindrical portion and the one or more fins are formed from the same material.
(8) The X-ray fluorescence spectrometric system according to another aspect of the present disclosure further includes the liquid sample cell.
(9) In the X-ray fluorescence spectrometric system according to another aspect of the present disclosure, the speed control module is configured to instruct the rotation mechanism to discontinuously change the rotation speed in the stirring period.
(10) In the X-ray fluorescence spectrometric system according to another aspect of the present disclosure, the speed control module is configured to issue, in the stirring period, to the rotation mechanism, an instruction to rotate in a forward direction for a predetermined length of time, and then an instruction to rotate in a reverse direction.
(11) In the X-ray fluorescence spectrometric system according to another aspect of the present disclosure, the speed control module is configured to issue an instruction to stop the rotation mechanism in the post-stirring measurement period.
(12) In the X-ray fluorescence spectrometric system according to another aspect of the present disclosure, the speed control module is configured to issue an instruction to rotate the rotation mechanism in the post-stirring measurement period.
(13) In the X-ray fluorescence spectrometric system according to another aspect of the present disclosure, the speed control module is configured to issue, in the post-stirring measurement period, to the rotation mechanism, an instruction to rotate in a forward direction for a predetermined length of time, and then an instruction to rotate in a reverse direction.
(14) According to one aspect of the present disclosure, there is provided a non-transitory computer-readable information storage medium having an X-ray fluorescence spectrometric program stored thereon, the X-ray fluorescence spectrometric program being executed by a computer used as an X-ray fluorescence spectrometric system, the X-ray fluorescence spectrometric system including: a sample stage on which a sample cell is to be placed and which has an opening for exposing a lower surface of the sample cell, the sample cell having a containing space in which a sample is to be contained; a rotation mechanism configured to rotate the sample cell placed on the sample stage; an X-ray source configured to, from under the sample stage, irradiate the lower surface with X-rays through the opening in the sample stage; a detector configured to measure an intensity of fluorescent X-rays emitted from the sample; and a speed control module configured to control a rotation speed of the rotation mechanism, the sample cell including: a liquid sample cell in which a liquid sample is to be contained, and which includes a portion in which a cross-section of the containing space parallel to the lower surface is other than a circle centered about a rotation axis of the sample cell; and a solid sample cell configured to contain a solid sample, the X-ray fluorescence spectrometric program causing the computer to execute operation modes including: an unstirred measurement mode in which the detector executes measurement during rotation of the rotation mechanism at a constant rotation speed under control of the speed control module; and a stirred measurement mode including a stirring period in which the liquid sample is stirred through rotation of the rotation mechanism at a varying rotation speed which is determined by the speed control module, and a post-stirring measurement period in which the detector executes measurement after the liquid sample is stirred.
(15) In the information storage medium according to another aspect of the present disclosure, the stirred measurement mode includes alternating between the stirring period and the post-stirring measurement period, and the X-ray fluorescence spectrometric program causes the computer to execute, when the stirred measurement mode is executed, the steps of: measuring, with the detector, a fluorescent X-ray intensity in the post-stirring measurement period executed for an n-th time; measuring, with the detector, a fluorescent X-ray intensity in the post-stirring measurement period executed for an (n+1)-th time; and determining whether to set the stirring period to be executed for an (n+2)-th time, based on the fluorescent X-ray intensity measured in the post-stirring measurement period executed for the n-th time and the fluorescent X-ray intensity measured in the post-stirring measurement period executed for the (n+1)-th time.
(16) In the information storage medium according to another aspect of the present disclosure, the step of determining includes setting the stirring period to be executed for the (n+2)-th time when a difference between, or a ratio of, the fluorescent X-ray intensity measured in the post-stirring measurement period executed for the n-th time and the fluorescent X-ray intensity measured in the post-stirring measurement period executed for the (n+1)-th time is more than a predetermined value.
(17) According to aspect of the present disclosure, there is provided a liquid sample cell, wherein the containing space of the liquid sample cell has a substantially cylindrical shape, and wherein the liquid sample cell includes one or more fins each having predetermined lengths in a radial direction of the containing space and an axial direction.
(18) The liquid sample cell according to another aspect of the present disclosure includes a cylindrical portion having an upper surface that is an opening, wherein the cylindrical portion and the one or more fins are formed separately from each other, and each of the one or more fins is fitted into the cylindrical portion.
(19) In the liquid sample cell according to another aspect of the present disclosure, the cylindrical portion and the one or more fins are formed from the same material.
(20) According to aspect of the present disclosure, there is provided an X-ray fluorescence spectrometric program to be executed by a computer used as an X-ray fluorescence spectrometric system, the X-ray fluorescence spectrometric system including: a sample stage on which a sample cell is to be placed and which has an opening for exposing a lower surface of the sample cell, the sample cell having a containing space in which a sample is to be contained; a rotation mechanism configured to rotate the sample cell placed on the sample stage; an X-ray source configured to, from under the sample stage, irradiate the lower surface with X-rays through the opening in the sample stage; a detector configured to measure an intensity of fluorescent X-rays emitted from the sample; and a speed control module configured to control a rotation speed of the rotation mechanism, the sample cell including: a liquid sample cell in which a liquid sample is to be contained, and which includes a portion in which a cross-section of the containing space parallel to the lower surface is other than a circle centered about a rotation axis of the sample cell; and a solid sample cell configured to contain a solid sample, the X-ray fluorescence spectrometric program causing the computer to execute operation modes including: an unstirred measurement mode in which the detector executes measurement during rotation of the rotation mechanism at a constant rotation speed under control of the speed control module; and a stirred measurement mode including a stirring period in which the liquid sample is stirred through rotation of the rotation mechanism at a varying rotation speed which is determined by the speed control module, and a post-stirring measurement period in which the detector executes measurement after the liquid sample is stirred.

### Brief Description of Drawings

FIG. 1 is a diagram illustrating an outline of an X-ray fluorescence spectrometric system.
FIG. 2 is an overlooking view of a sample stage and a rotation mechanism.
FIG. 3 is a diagram illustrating a hardware configuration of an information processing apparatus.
FIG. 4 is a function block diagram of a calculation unit.
FIG. 5 is a top view and a sectional view of a liquid sample cell.
FIG. 6 is a top view and a sectional view of a solid sample cell.
FIG. 7 is an explanatory time chart illustrating a first embodiment of the present disclosure.
FIG. 8 is an explanatory flow chart illustrating a second embodiment of the present disclosure.
FIG. 9 is a top view and a sectional view of a liquid sample cell according to Modification Example 1.
FIG. 10 is a top view and a sectional view of a liquid sample cell according to Modification Example 2.
FIG. 11 is a top view and a sectional view of a liquid sample cell according to Modification Example 3.
FIG. 12 is a top view and a sectional view of a sample cell according to Modification Example 4.

### Description of Embodiments

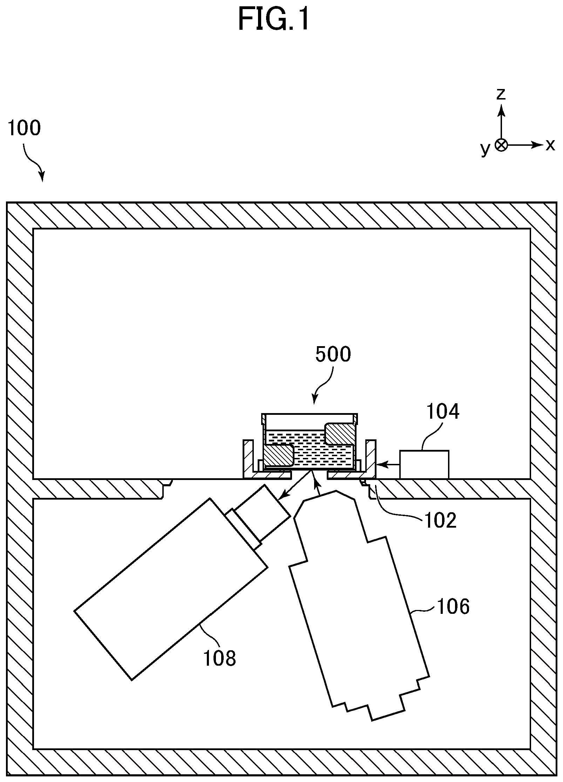

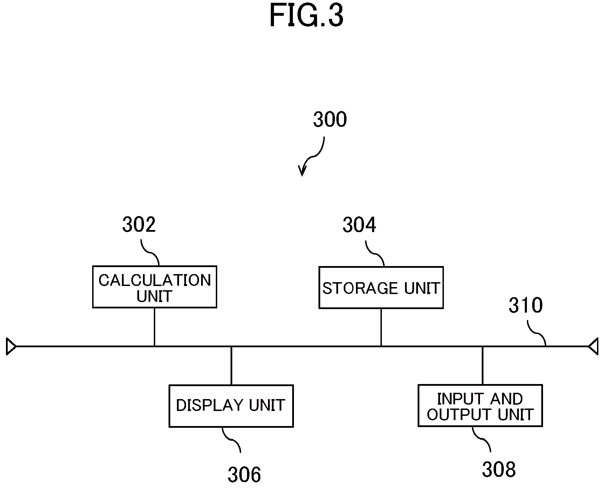

Now, preferred embodiments for carrying out the present invention (hereinafter referred to as "embodiments") will be described with reference to the drawings. FIG. 1 is a schematic diagram illustrating, in section, an X-ray fluorescence spectrometric system 100 according to the embodiments. As illustrated in FIG. 1, the X-ray fluorescence spectrometric system 100 includes a sample stage 102, a rotation mechanism 104, an X-ray source 106, a detector 108, and an information processing apparatus 300 (see FIG. 3).

From under the sample stage 102, the X-ray source 106 irradiates a lower surface with X-rays through an opening in the sample stage 102. Specifically, the X-ray source 106 is placed on a side below the sample stage 102. An opening is formed in the sample stage 102, and primary X-rays are radiated toward the opening from under the sample stage 102.

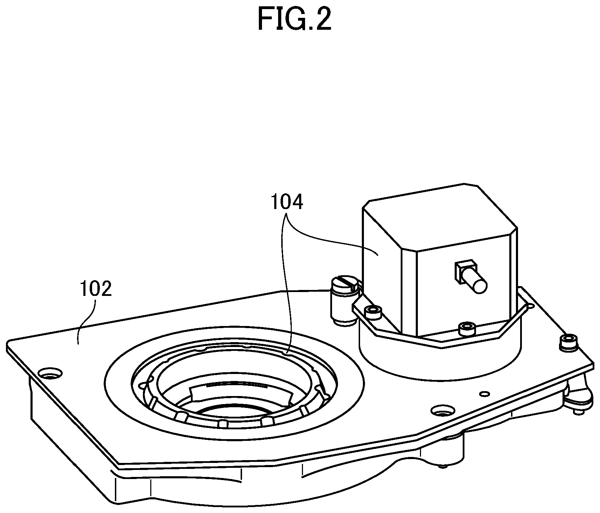

The sample stage 102 has an opening over which a sample cell is placed and in which a lower surface of the sample cell is exposed. To give a specific example, FIG. 2 is an overlooking view of the sample stage 102 and the rotation mechanism 104 placed on the sample stage 102. As illustrated in FIG. 2, the sample stage 102 has the opening at a position at which a sample cell is to be placed. The opening is formed on a trajectory of the primary X-rays emitted by the X-ray source 106. A liquid sample cell 500 and a solid sample cell 600 are placeable on the sample stage 102 in the embodiments. It is sufficient for the sample stage 102 to be designed so that the solid sample cell 600 is placeable, and the sample stage 102 is not required to be designed so that the liquid sample cell 500 is placeable.

The rotation mechanism 104 rotates a sample cell placed on the sample stage 102. Specifically, the rotation mechanism 104 includes, for example, an actuator which is a motor or the like, and a ring-shaped member provided in the opening of the sample stage 102. The actuator rotates the ring-shaped member through a belt (not shown), and the rotation mechanism 104 thus rotates the sample cell placed on the sample stage 102 in an X-Y plane. In the following description, a plane horizontal to a surface of the sample stage 102 is the X-Y plane (a right direction of FIG. 1 is an X-direction, and a near-side direction in FIG. 1 is a Y-direction), and a direction perpendicular to the X-Y plane (an upper direction of FIG. 1) is a Z-direction.

The detector 108 measures an intensity of fluorescent X-rays emitted from a sample. Specifically, the detector 108 is, for example, a proportional counter. The detector 108 is placed at a position where the fluorescent X-rays enter so as to detect the fluorescent X-rays, and outputs a pulse signal. The output pulse signal is input to a counting unit. The counting unit counts pulse signals to acquire the count as the fluorescent X-ray intensity. Data indicating the fluorescent X-ray intensity which has been counted by the counting unit is transmitted to the information processing apparatus 300.

A spectroscopic device for dispersing fluorescent X-rays that are emitted from a sample and that have a predetermined wavelength may be provided. The spectroscopic device is placed on a trajectory of the primary X-rays or a trajectory of the fluorescent X-rays. The spectroscopic device and the detector 108 may be provided for each element to be analyzed, or a configuration in which one pair of the spectroscopic device and the detector 108 are moved by rotation may be employed. In a case of moving one pair of the spectroscopic device and the detector 108 by rotation, a mechanism (goniometer) for moving the spectroscopic device and the detector 108 by rotation is arranged.

The information processing apparatus 300 controls operation of the rotation mechanism 104 and the X-ray source 106, and also performs analysis of a sample based on output from the counting unit, as well as display and output of a result of the analysis. To give a specific example, the information processing apparatus 300 is a personal computer and, as illustrated in FIG. 3, includes a calculation unit 302, a storage unit 304, a display unit 306, an input and output unit 308, and an internal bus 310.

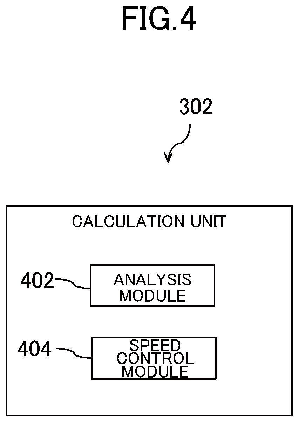

The calculation unit 302 is a CPU, an MPU, or the like, and operates in accordance with a program stored in the storage unit 304. FIG. 4 is a function block diagram of the calculation unit 302. The calculation unit 302 includes, in terms of functions, an analysis module 402 and a speed control module 404. The analysis module 402 controls operation of the rotation mechanism 104 and the X-ray source 106, and also analyzes a sample based on output from the counting unit. The speed control module 404 controls a rotation speed of the rotation mechanism 104. The calculation unit 302 executes an X-ray fluorescence spectrometric program stored in the storage unit 304, to thereby cause the analysis module 402 and the speed control module 404 to perform the functions described above. Details of operation of the speed control module 404 will be described later.

The storage unit 304 is a non-transitory computer-readable information storage medium having stored thereon the X-ray fluorescence spectrometric program to be executed by the computer used as the X-ray fluorescence spectrometric system 100. To give a specific example, the storage unit 304 is an information recording medium such as a ROM, a RAM, or a hard disk. The storage unit 304 stores the X-ray fluorescence spectrometric program to be executed by the calculation unit 302. The storage unit 304 also operates as, for example, a working memory of the calculation unit 302. The X-ray fluorescence spectrometric program causes the information processing apparatus 300 to execute operation modes including an unstirred measurement mode (described later) and a stirred measurement mode (described later).

The display unit 306 is, for example, a liquid crystal display or an organic EL display, and displays information following an instruction from the calculation unit 302.

The input and output unit 308 is a keyboard and a mouse, and receives input from a user. The input and output unit 308 is also a communication interface such as a network interface or a USB port, and carries out communication to and from another computer by cable communication or wireless communication. The calculation unit 302, the storage unit 304, the display unit 306, and the input and output unit 308 are connected to one another by the internal bus 310.

In the description given above, the liquid sample cell 500 and the solid sample cell 600 are not included in the X-ray fluorescence spectrometric system 100, but the X-ray fluorescence spectrometric system 100 may include the liquid sample cell 500 and/or the solid sample cell 600.

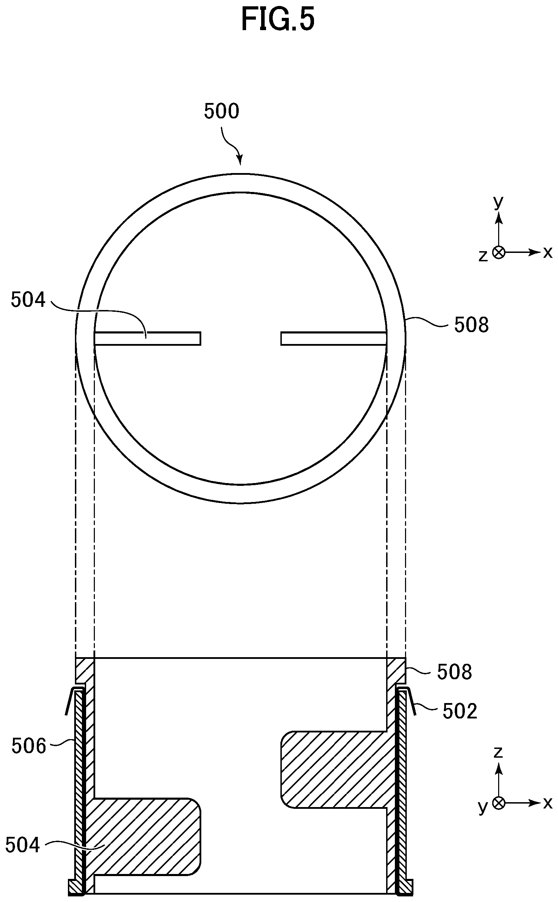

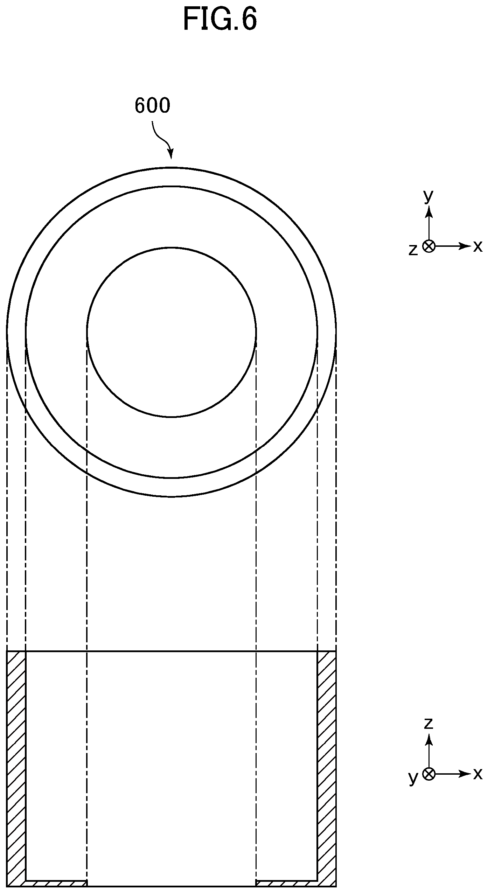

Sample cells according to the embodiments will now be described. The sample cells used in the embodiments include the liquid sample cell 500 and the solid sample cell 600. FIG. 5 is a top view and a sectional view of the liquid sample cell 500 in which a liquid sample is to be contained. FIG. 6 is a top view and a sectional view of the solid sample cell 600 in which a solid sample is to be contained. The liquid sample cell 500 and the solid sample cell 600 both have a containing space in which a sample is to be contained.

The liquid sample cell 500 contains a liquid sample and includes a portion (hereinafter also referred to as "stirring portion") in which a cross-section of the containing space parallel to a lower surface is not a circle centered about a rotation axis of the sample cell. The stirring portion is a portion provided in order to stir a liquid sample contained in the liquid sample cell 500. Specifically, as illustrated in FIG. 5, the liquid sample cell 500 includes a cylindrical portion having an upper surface that is an opening, a film 502, and a fin 504, which is the stirring portion. The cylindrical portion includes an outer member 506 and an inner member 508. The outer member 506 and the inner member 508 each have a substantially cylindrical shape, and an opening on each of an upper side and a lower side. The inner member 508 is inserted inside the outer member 506. The film 502 is sandwiched and fixed between the outer member 506 and the inner member 508 to cover the opening on the lower side of the inner member 508. A liquid sample to be analyzed by the X-ray fluorescence spectrometric system 100 is placed in a space surrounded by the film 502 together with the inner member 508 (the containing space). The containing space of the liquid sample cell 500 has a substantially cylindrical shape because the inner member 508 is substantially cylindrical.

The fin 504 is provided inside the cylindrical portion. Specifically, the fin 504 has predetermined lengths in a radial direction of the containing space and a rotation axis direction. For example, the fin 504 has predetermined lengths in the radial direction (X-direction) of the containing space and the rotation axis direction (Z-direction). The fin 504 is placed so as to extend from an inner wall of the cylindrical portion (inner member 508) toward a center thereof. In the example illustrated in FIG. 5, the fin 504 has a rectangular plate shape that is shorter in length in the Y-direction than in the radial direction and the rotation axis direction. The lengths in the radial direction of the containing space and the rotation axis direction are only required to be long enough to stir a liquid sample. For example, the length in the radial direction of the containing space is desired to be approximately one third of a diameter of the cylindrical portion. The length in the rotation axis direction is desired to be approximately one third of a height of the cylindrical portion.

It is sufficient for the liquid sample cell 500 according to a first embodiment of the present disclosure to include at least one fin 504. However, the liquid sample cell 500 is desired to include two or more fins 504. In Example illustrated in FIG. 5, the liquid sample cell 500 includes two fins 504 which differ from each other in distance from the lower surface in the rotation axis direction (Z-axis direction). The fin 504 on a left side of FIG. 5 is at a position lower in height from a level of the film 502 than the fin 504 on a right side of FIG. 5.

A shape of the fin 504 in an X-Z plane is not limited to a rectangular shape, and may be another shape. For example, the fin 504 may be circular or triangular in shape. The fin 504 in Example illustrated in FIG. 5 may also be shaped so that each side is (or some sides are) wave-like or arc-like.

The fin 504 is formed integrally with the cylindrical portion in FIG. 5, but may be formed separately from the cylindrical portion to be fitted into the cylindrical portion.

Further, the cylindrical portion and the fin 504 are desired to be formed from the same material. Influence from noise which is anything other than the fluorescent X-rays emitted from a liquid sample to be analyzed on accuracy of analysis can be reduced by using the same material for the cylindrical portion and for the fin 504.

The solid sample cell 600 contains a solid sample. Specifically, as illustrated in FIG. 6, the solid sample cell 600 has a substantially cylindrical shape in which an entire upper surface opens and an opening smaller than the upper surface is provided in a lower surface. A solid sample is contained between the upper surface and the lower surface. The solid sample is exposed in the opening formed in the lower surface. In a case of analyzing a solid sample that is in a powder form, the film 502 may be provided in the opening in the lower surface.

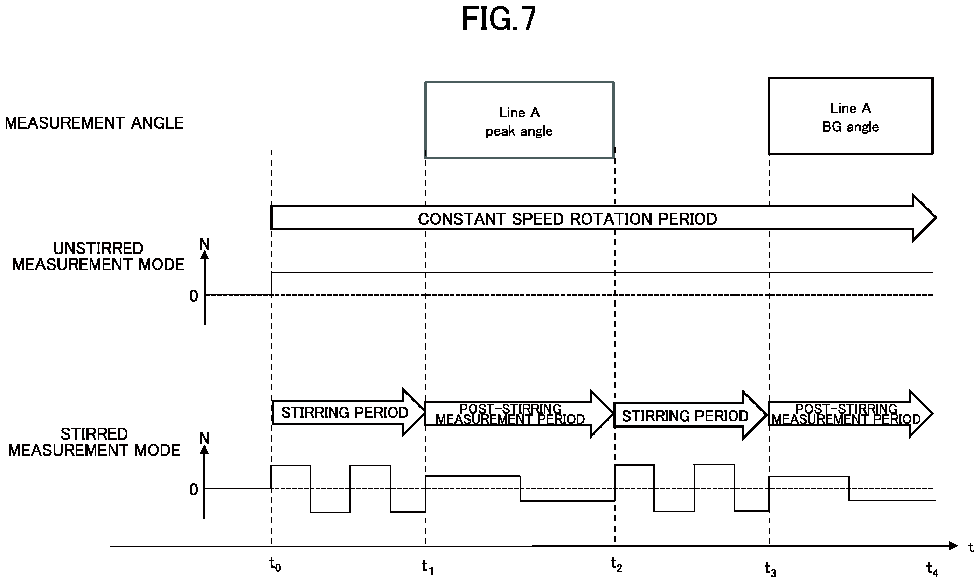

Operation of the X-ray fluorescence spectrometric system 100 will now be described. The X-ray fluorescence spectrometric system 100 operates in operation modes including the unstirred measurement mode and the stirred measurement mode. FIG. 7 is a time chart for illustrating the respective operation modes.

An upper section of FIG. 7 is information indicating a fluorescent X-ray's angle to be measured (an angle formed by a surface of the spectroscopic device described above and a traveling direction of fluorescent X-rays entering the detector 108). A middle section of FIG. 7 is information indicating a rotation speed in a case in which the X-ray fluorescence spectrometric system 100 operates in the unstirred measurement mode. A lower section of FIG. 7 is information indicating rotation speeds in a case in which the X-ray fluorescence spectrometric system 100 operates in the stirred measurement mode.

The unstirred measurement mode is a measurement mode in which the solid sample cell 600 is placed on the sample stage 102, and the detector 108 executes measurement during rotation of the rotation mechanism 104 at a constant rotation speed under control of the speed control module 404. Specifically, the unstirred measurement mode includes only a constant-speed rotation period. First, a solid sample to be measured is placed in the solid sample cell 600 illustrated in FIG. 6. The solid sample is exposed in the opening in the lower surface of the solid sample cell 600. The solid sample cell 600 is placed on the sample stage 102.

Next, at a time point t0, the speed control module 404 issues an instruction to rotate the rotation mechanism 104 at a constant rotation speed to the rotation mechanism 104. This causes the solid sample cell 600 to rotate in the X-Y plane in a period from the time point t0 to a time point t1. Next, at the time point t1, the detector 108 starts measurement of the fluorescent X-ray intensity at a peak angle of Line A (any fluorescent X-rays). In a period from the time point t1 to a time point t2, the detector 108 executes the measurement of the fluorescent X-ray intensity at the peak angle. Next, at the time point t2, the detector 108 stops the measurement of the fluorescent X-ray intensity. In a period from the time point t2 to a time point t3, the detector 108 executes no measurement of the fluorescent X-ray intensity. Next, at the time point t3, measurement of the fluorescent X-ray intensity at a background angle of Line A (any fluorescent X-rays) is started. In a period from the time point t3 to a time point t4, the detector 108 executes the measurement of the fluorescent X-ray intensity at the background angle. At the time point t4 or a time point subsequent to t4, the analysis module 402 performs analysis of an element that emits the fluorescent X-rays relating to Line A, based on the fluorescent X-ray intensity at the peak angle and the fluorescent X-ray intensity at the background angle.

The rotation speed of the solid sample cell 600 in the unstirred measurement mode is constant (for example, 60 rpm). Fluctuations in analysis result due to surface irregularities of a solid sample can be reduced by rotation of a surface of the solid sample that is irradiated with the primary X-rays at a constant rotation speed. The rotation speed being constant in the unstirred measurement mode means that the rotation speed in a period in which the detector 108 measures the fluorescent X-ray intensity is constant. That is, the rotation speed is allowed to change even in a period of operation in the unstirred measurement mode, as long as the period is a period in which the detector 108 is not measuring the fluorescent X-ray intensity. For example, the rotation speed is allowed to change in a period prior to start of the measurement of the fluorescent X-ray intensity by the detector 108 (a period in which the rotation speed changes from an initial state to the constant rotation speed), or a period after the detector 108 finishes measuring the fluorescent X-ray intensity, out of a period of operation in the unstirred measurement mode. A range of the constant rotation speed is a range of rotation speeds at which fluctuations in analysis accuracy due to surface irregularities of a solid sample can be reduced. For example, even if the speed control module 404 controls the rotation mechanism 104 to rotate at a constant speed, the rotation speed of the rotation mechanism 104 may vary depending on given conditions (such as changes in temperature or humidity). There is also a case in which the rotation speed of the rotation mechanism 104 changes due to characteristics (production tolerance, reliability, and the like) of the rotation mechanism 104. However, a slight change in rotation speed is regarded as falling within the range of a constant rotation speed as long as the change falls within the range of rotation speeds at which fluctuations in analysis accuracy due to surface irregularities of a solid sample are reduceable.

The stirred measurement mode is a measurement mode in which the liquid sample cell 500 is placed on the sample stage 102 and the liquid sample is analyzed. Specifically, the stirred measurement mode includes a stirring period and a post-stirring measurement period.

The stirring period is a period in which the liquid sample is stirred through rotation of the rotation mechanism 104 at a varying rotation speed which is caused by the speed control module 404. Specifically, in the stirring period, the speed control module 404 issues an instruction to the rotation mechanism 104 to change the rotation speed in a discontinuous manner. For example, the speed control module 404 issues to the rotation mechanism 104, in the stirring period, an instruction to rotate in a forward direction for a predetermined length of time, and then an instruction to rotate in a reverse direction. The forward direction and the reverse direction are rotation directions within the X-Y plane, and any one of the forward direction or the reverse direction may be clockwise. In the following description, the forward direction is clockwise and the reverse direction is counterclockwise. A rotation speed in the forward direction is expressed by a positive numerical value, and a rotation speed in the reverse direction is expressed by a negative numerical value.

The post-stirring measurement period is a period in which the detector 108 executes measurement after the liquid sample is stirred. Specifically, in the post-stirring measurement period which follows the stirring period, the detector 108 measures the intensity of fluorescent X-rays emitted from the sample. The speed control module 404 may issue an instruction to rotate the rotation mechanism 104 in the post-stirring measurement period. For example, in the post-stirring measurement period, the speed control module 404 may issue an instruction to the rotation mechanism 104 to rotate in the forward direction for a predetermined length of time, and then an instruction to rotate in the reverse direction. The speed control module 404 may also issue an instruction to stop the rotation mechanism 104 in the post-stirring measurement period.

In the example illustrated in FIG. 7, first, a liquid sample to be measured is placed in the liquid sample cell 500 illustrated in FIG. 5. The liquid sample cell 500 is placed on the sample stage 102.

Next, at the time point t0, the speed control module 404 issues, to the rotation mechanism 104, an instruction to rotate the rotation mechanism 104 clockwise at a predetermined rotation speed (for example, 60 rpm). This causes the sample cell to start rotating clockwise in the X-Y plane from the time point t0. After a predetermined length of time (for example, 5 seconds) passes, the speed control module 404 further issues, to the rotation mechanism 104, an instruction to rotate the rotation mechanism 104 counterclockwise at a predetermined rotation speed (for example, -60 rpm). This causes the sample cell to start rotating counterclockwise in the X-Y plane. The rotation speed may change discontinuously from 60 rpm to -60 rpm upon elapse of a predetermined length of time since the time point t0, or may change continuously from 60 rpm to -60 rpm over a certain length of time. As the time point t1 and the rotation speed, values sufficient for stirring of the liquid sample are set.

It is sufficient for the speed control module 404 to issue, at least once, an instruction to discontinuously change the rotation speed in the stirring period, but the speed control module 404 is desired to issue the instruction a plurality of times. To give a specific example, the speed control module 404 is desired to instruct the rotation mechanism 104 to rotate in the forward direction (at a rotation speed of, for example, 60 rpm) and the reverse direction (at a rotation speed of, for example, -60 rpm) alternatingly for each fixed length of time (for example, 5 seconds). To give another example, the speed control module 404 may alternatingly issue, to the rotation mechanism 104, an instruction to rotate in the forward direction (at a rotation speed of, for example, 60 rpm) and an instruction to stop (the rotation speed: 0 rpm) whenever a fixed length of time (for example, 5 seconds) passes. In the example illustrated in FIG. 7, the period from the time point t0 to the time point t1 includes two periods of rotation in the forward direction and two periods of rotation in the reverse direction.

The liquid sample contained in the liquid sample cell 500 is stirred by a change in rotation speed of the liquid sample cell 500. Specifically, after elapse of a sufficient length of time in which the liquid sample cell 500 has rotated at a constant rotation speed, the liquid sample is in a state of rotation at the same rotation speed as the rotation speed of the liquid sample cell 500. In this state, a relative speed of the cylindrical portion and the liquid sample is 0. In an assumed case in which a liquid sample is contained in a cylindrical liquid sample cell 500 that includes no stirring portion, and the rotation speed of the liquid sample cell 500 changes, the liquid sample rotates at a rotation speed prior to the change in accordance with the law of inertia. In the present disclosure, however, the stirring portion is provided, and hence, when the rotation speed of the liquid sample cell 500 changes, part of the liquid sample that is near the stirring portion is inhibited by the stirring portion from rotating at a rotation speed that follows the law of inertia. As a result, a disturbance is caused in flow of the liquid sample with the stirring portion as a starting point, and the liquid sample is thus stirred.

Next, at the time point t1, the detector 108 starts measurement of the fluorescent X-ray intensity at a peak angle of Line A (any fluorescent X-rays). In the period from the time point t1 to the time point t2, the detector 108 executes the measurement of the fluorescent X-ray intensity at the peak angle. In the post-stirring measurement period, the speed control module 404 may issue an instruction to rotate the rotation mechanism 104. For example, in the period from the time point t1 to the time point t2, the speed control module 404 may issue, to the rotation mechanism 104, an instruction to rotate in the forward direction at a predetermined rotation speed (for example, 30 rpm) for a predetermined length of time (for example, 10 seconds), and then an instruction to rotate in the reverse direction at a predetermined rotation speed (for example, -30 rpm) for a predetermined length of time (for example, 10 seconds). The speed control module 404 may also issue an instruction to stop the rotation mechanism 104 in the post-stirring measurement period.

At the time point t1, the liquid sample is in a thoroughly stirred state. Accordingly, whether to rotate the rotation mechanism 104 in the post-stirring measurement period is set suitably, depending on whether a sedimentary component contained in the liquid sample precipitates in the post-stirring measurement period. In the example illustrated in FIG. 7, the period from the time point t1 to the time point t2 includes one period of rotation in the forward direction and one period of rotation in the reverse direction. The rotation speed in the forward direction and the reverse direction in the post-stirring measurement period is half the rotation speed in the forward direction and the reverse direction in the stirring period.

Next, at the time point t2, the detector 108 stops the measurement of the fluorescent X-ray intensity. In the period from the time point t2 to the time point t3, the detector 108 executes no measurement of the fluorescent X-ray intensity. The rotation speed in the stirring period from the time point t2 to the time point t3 may be the same as or differ from the rotation speed in the stirring period from the time point t0 to the time point t1. In the example illustrated in FIG. 7, the period from the time point t2 to the time point t3 includes two periods of rotation in the forward direction and two periods of rotation in the reverse direction.

Next, at the time point t3, measurement of the fluorescent X-ray intensity at a background angle of Line A (any fluorescent X-rays) is started. In the period from the time point t3 to the time point t4, the detector 108 executes the measurement of the fluorescent X-ray intensity at the background angle. The rotation speed in the post-stirring measurement period from the time point t3 to the time point t4 may be the same as or differ from the rotation speed in the post-stirring measurement period from the time point t1 to the time point t2. In the example illustrated in FIG. 7, the period from the time point t3 to the time point t4 includes one period of rotation in the forward direction and one period of rotation in the reverse direction.

At the time point t4 or a time point subsequent to t4, the analysis module 402 performs analysis of an element that emits the fluorescent X-rays relating to Line A, based on the fluorescent X-ray intensity at the peak angle and the fluorescent X-ray intensity at the background angle.

As described above, according to the present disclosure, suppression of an increase in manufacturing cost and a reduction in influence from precipitation of a sedimentary component on a measurement result are achieved by using the rotation mechanism 104 for lessening reducing influence from surface roughness of a solid sample and by providing the stirring portion in the liquid sample cell 500, respectively.

The present disclosure may be applied to the X-ray fluorescence spectrometric system 100 of any of a wavelength-dispersive type or an energy-dispersive type. The present disclosure is not limited to Example described above, and various modifications may be made thereto. The configuration of the X-ray fluorescence spectrometric system 100 described above is an example, and the X-ray fluorescence spectrometric system 100 is not limited thereto. The configuration given in Example described above may be replaced with a configuration that is substantially the same, a configuration having the same actions and effects, or a configuration that achieves the same goal. For example, the length and the number of times of the stirring period are set in advance in FIG. 7, but a configuration in which the length and the number of times of the stirring period are changed based on a result of the analysis may be employed.

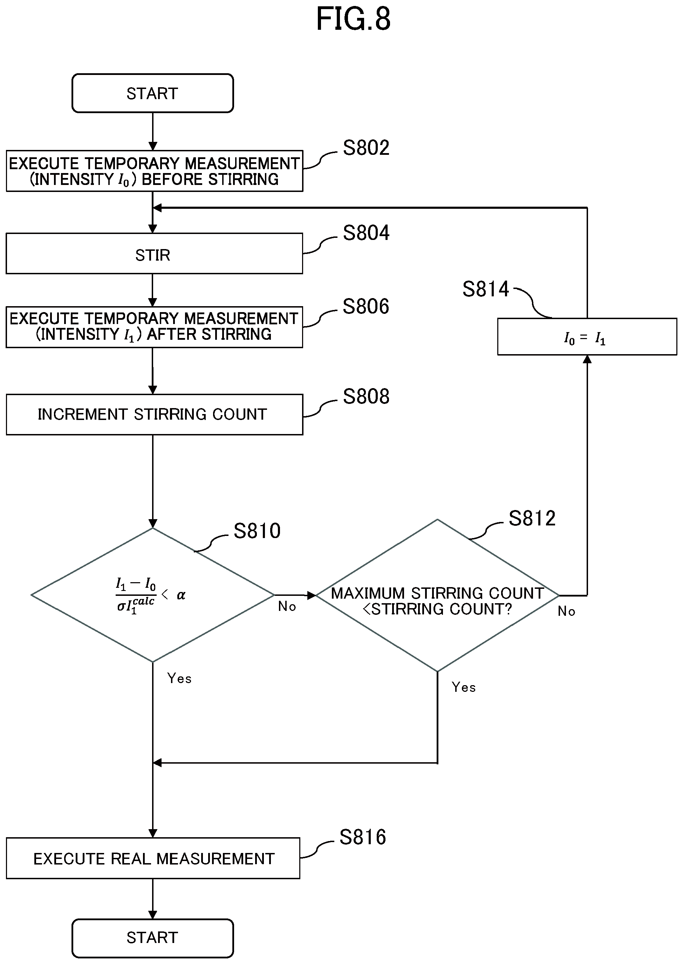

FIG. 8 is a flow chart illustrating operation of the X-ray fluorescence spectrometric system 100 in a stirred measurement mode according to a second embodiment of the present disclosure. In the second embodiment, a case in which only the intensity at the peak angle is measured and measurement of background intensity near the peak angle is not executed will be described. First, temporary measurement before stirring is executed (Step S802). An initial value of a variable "n" indicating the count of stirring is assumed to be 0.

Specifically, first, a liquid sample to be measured is placed in the liquid sample cell 500 illustrated in FIG. 5. The liquid sample cell 500 is placed on the sample stage 102. At the time of Step S802, the liquid sample cell 500 is not rotating. The liquid sample is then irradiated with primary X-rays, and the detector 108 measures the intensity of fluorescent X-rays emitted from the liquid sample. The intensity measured in Step S802 is denoted by I₀.

Next, in the stirring period, the speed control module 404 instructs the rotation mechanism 104 to discontinuously change the rotation speed (Step S804). Step S804 corresponds to the stirring period, and is the same as one stirring period included in FIG. 7. For example, the stirring period of Step S804 includes two periods of rotation in the forward direction and two periods of rotation in the reverse direction.

Next, temporary measurement after stirring is executed (Step S806). As described later, steps from Step S804 to Step S814 are repeatedly executed. Step S806 is a step in which the detector 108 measures the fluorescent X-ray intensity in an n-th-time post-stirring measurement period and, when "n" is 1, is the first-time post-stirring measurement period. Step S806 is the same as one post-stirring measurement period included in FIG. 7. The detector 108 measures the intensity of fluorescent X-rays emitted from the liquid sample. The intensity measured in Step S806 is denoted by I₁.

Next, the stirring count "n" is incremented (Step S808). For example, in a case in which Step S808 is executed for the first time, the stirring count is incremented from 0 to 1.

Next, whether to set the (n+2)-th-time stirring period is determined based on the fluorescent X-ray intensity measured in the n-th-time post-stirring measurement period and the fluorescent X-ray intensity measured in the (n+1)-th-time post-stirring measurement period (Step S810). Specifically, the (n+2)-th-time stirring period is set when a difference between, or a ratio of, the fluorescent X-ray intensity measured in the n-th-time post-stirring measurement period and the fluorescent X-ray intensity measured in the (n+1)-th-time post-stirring measurement period is more than a predetermined value. For example, when "n" is 1, the intensity I₀ is a value measured in Step S802. The fluorescent X-ray intensity measured in the first-time post-stirring measurement period is the intensity I₁ measured in Step S806. When the difference between the intensity I₀ and the intensity I₁ is less than a prescribed magnification α of a theoretical intensity standard deviation σI₁^{calc}, the process proceeds to Step S816 and, when the difference is equal to or more than the prescribed magnification α, the process proceeds to Step S812. The prescribed magnification α is a value set in advance.

In Step S812, whether the stirring count "n" is higher than a maximum stirring count set in advance is determined. The process proceeds to Step S816 when the stirring count "n" is higher than the maximum stirring count, and proceeds to Step S814 when the stirring count "n" is lower than the maximum stirring count. Any value can be set as the maximum stirring count, for example, 10.

In Step S814, the intensity I₁ is set as the value of the intensity I₀. Specifically, when the stirring count "n" is 1, the intensity I₁ that has been measured in Step S806 executed for the first time is set as the value of the intensity I₀. The process then proceeds to Step S804 again.

When it is determined in Step S810 and Step S812 that the process is to proceed to Step S816, real measurement is executed (Step S816). Step S816 is the same as one post-stirring measurement period included in FIG. 7.

According to the second embodiment, the stirred measurement mode includes the stirring period and the post-stirring measurement period alternatingly. Further, there are the steps of: measuring, using the detector 108, the fluorescent X-ray intensity in the post-stirring measurement period executed for the n-th time; measuring, using the detector 108, the fluorescent X-ray intensity in the post-stirring measurement period executed for the (n+1)-th time; and determining whether to set the stirring period to be executed for the (n+2)-th time, based on the fluorescent X-ray intensity measured in the post-stirring measurement period executed for the n-th time and the fluorescent X-ray intensity measured in the post-stirring measurement period executed for the (n+1)-th time.

When the liquid sample is in a thoroughly stirred state, the difference between the intensity I₀ and the intensity I₁ is less than the prescribed magnification α of the theoretical intensity standard deviation σI₁^{calc}. In contrast, when the liquid sample is in an insufficiently stirred state, the difference between the intensity I₀ and the intensity I₁ is more than the prescribed magnification α of the theoretical intensity standard deviation σI₁^{calc}. According to the second embodiment, performing analysis of a sample only after a required and sufficient number of times of the stirring period is achieved.

### [Modification Example 1]

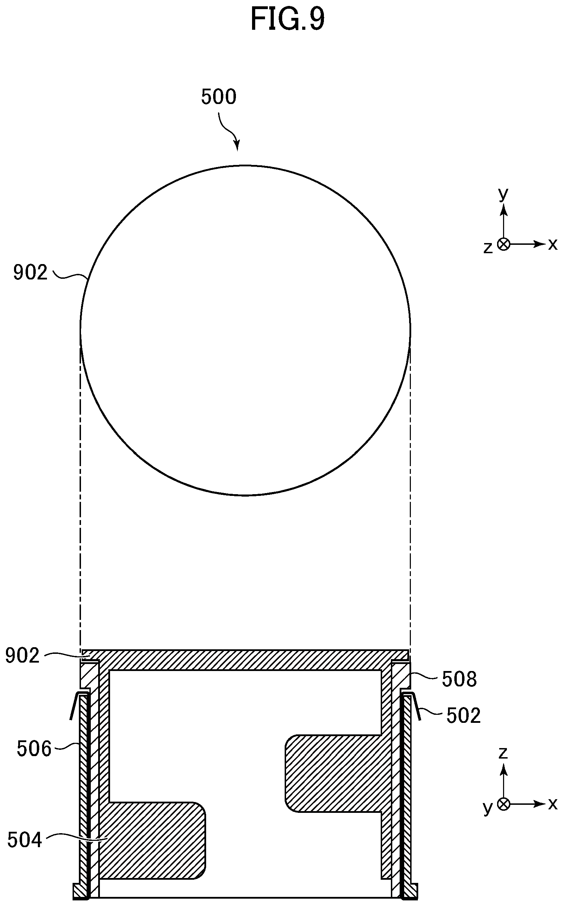

FIG. 9 is a top view and a sectional view of the liquid sample cell 500 according to Modification Example 1. Modification Example 1 is applicable to any of the first embodiment or the second embodiment. The liquid sample cell 500 according to Modification Example 1 includes a cylindrical portion having an upper surface that is an opening, and a lid portion 902 to be fitted into the opening. The fin 504 is formed integrally with the lid portion 902. Specifically, the lid portion 902 includes a disc-shaped portion which covers the opening in the upper surface of the cylindrical portion, two pillar-like portions extending from the disc-shaped portion substantially perpendicularly, and the fin 504 (stirring portion) provided on each of the two pillar-like portions. The lid portion 902 is fitted to the cylindrical portion by placing the two pillar-like portions apart from each other by a distance equal to an inner diameter of the cylindrical portion. In the example illustrated in FIG. 9, the fin 504 has the same shape and is provided at the same height as in the first embodiment and the second embodiment. The cylindrical portion and the film 502 are each the same as in the first embodiment and the second embodiment.

According to Modification Example 1, a risk of leakage of a liquid sample can be reduced by providing the lid portion 902. In addition, since the cylindrical portion and the film 502 in Modification Example 1 are the same as those in the conventional configuration, only the lid portion 902 needs to be manufactured, and Modification Example 1 can be used in combination with the conventional configuration.

### [Modification Example 2]

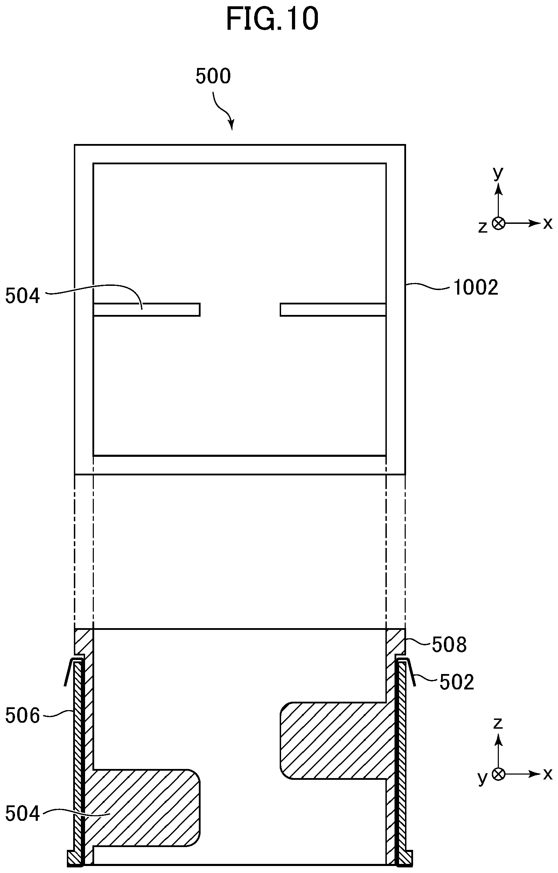

FIG. 10 is a top view and a sectional view of the liquid sample cell 500 according to Modification Example 2. Modification Example 2 is applicable to any of the first embodiment or the second embodiment. The liquid sample cell 500 according to Modification Example 2 includes a rectangular tube portion 1002 in place of the cylindrical portion in the first embodiment and the second embodiment. The rectangular tube portion 1002 has, as is the case for the cylindrical portion, a containing space in which a sample is to be contained.

The rectangular tube portion 1002 includes an outer member 506 and an inner member 508. The outer member 506 and the inner member 508 each have a substantially rectangular parallelepiped shape, and an opening on each of an upper side and a lower side. The inner member 508 is inserted inside the outer member 506. The film 502 is sandwiched and fixed between the outer member 506 and the inner member 508 to cover the opening on the lower side of the inner member 508. A liquid sample to be analyzed by the X-ray fluorescence spectrometric system 100 is placed in a space surrounded by the film 502 together with the inner member 508. The containing space of the liquid sample cell 500 has a substantially rectangular parallelepiped shape because the inner member 508 has a substantially rectangular parallelepiped shape.

The fin 504 is provided inside the cylindrical portion. The fin 504 is placed so as to extend from an inner wall of the rectangular tube portion 1002 toward a center thereof. The film 502 is the same as in the first embodiment and the second embodiment.

According to Modification Example 2, corner portions of the inner member 508 and the two fins 504 function as a stirring portion. That is, when the rotation speed of the liquid sample cell 500 changes, part of the liquid sample that is near the corner portions is inhibited from rotating at a rotation speed that follows the law of inertia. As a result, when the rotation speed of the liquid sample cell 500 changes, a disturbance is caused in flow of the liquid sample with the stirring portion as a starting point, and the liquid sample is thus stirred. The liquid sample can accordingly be stirred in a shorter time than in the first embodiment and the second embodiment. Although the fin 504 is desired to be provided in Modification Example 2 as well, the fin 504 in Modification Example 2 may be omitted.

### [Modification Example 3]

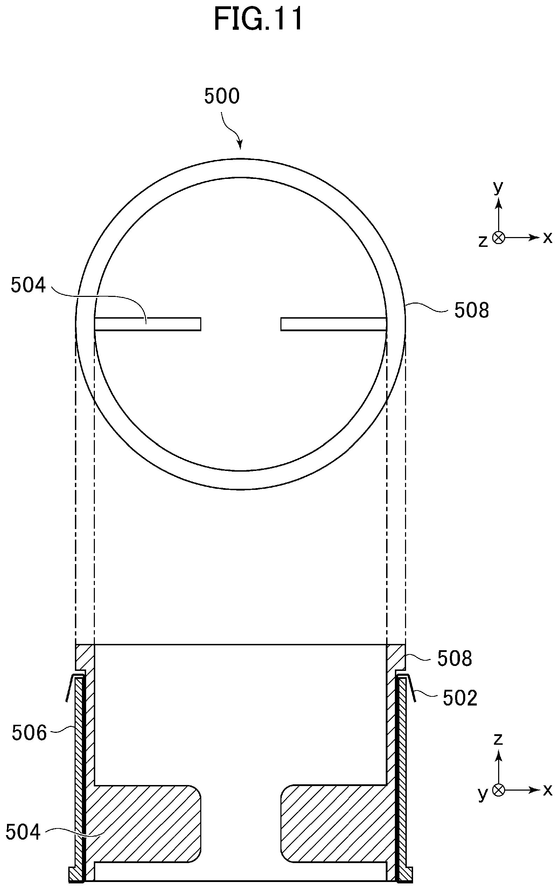

FIG. 11 is a top view and a sectional view of the liquid sample cell 500 according to Modification Example 3. Modification Example 3 is applicable to any of the first embodiment or the second embodiment. The liquid sample cell 500 according to Modification Example 3 differs from Example illustrated in FIG. 5 in placement height of the fin 504, but is otherwise the same. As illustrated in FIG. 11, two fins 504 are provided at the same height (a position in the Z-direction). The placement height of each fin 504 may be set to suit characteristics of a liquid sample. For example, placement height of one fin 504 and placement height of another fin 504 may be set differently from each other or the same as each other depending on viscosity of a liquid sample, likelihood of precipitation of a sedimentary component in the sample, or the like. As in the description given above, each fin 504 may have a shape other than a rectangular shape.

### [Modification Example 4]

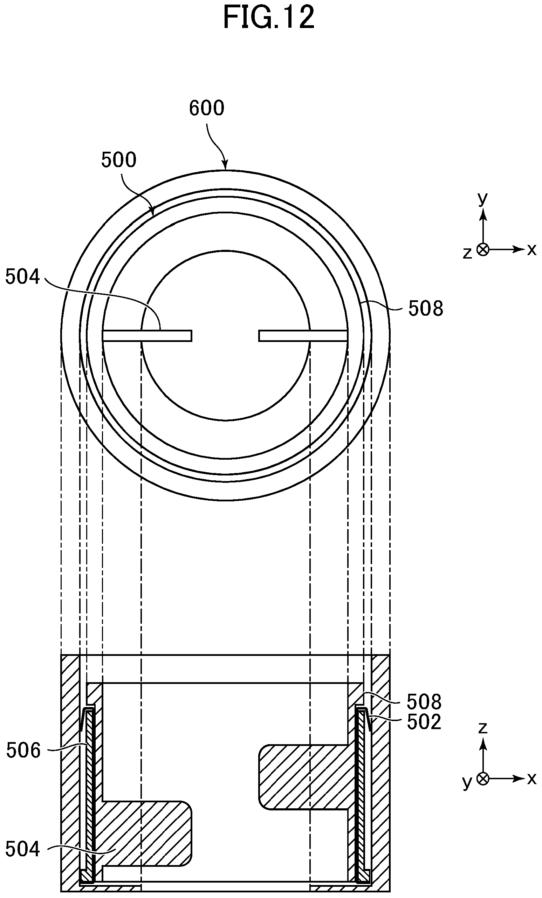

FIG. 12 is a top view and a sectional view of the sample cell according to Modification Example 4. Modification Example 4 is applicable to any of the first embodiment or the second embodiment. Modification Example 4 differs from Example illustrated in FIG. 5 in that the liquid sample cell 500 is sized so as to be placeable inside the solid sample cell 600, but is otherwise the same. In a case of analyzing a liquid sample in Modification Example 4, the liquid sample cell 500 containing the liquid sample is placed in the containing space of the solid sample cell 600, and the solid sample cell 600 is placed on the sample stage 102. In contrast, in a case of analyzing a solid sample, the solid sample is placed in the containing space of the solid sample cell 600, and the solid sample cell 600 is placed on the sample stage 102. In Modification Example 4 as well, two fins 504 may be at the same height, and each fin 504 may have a shape other than a rectangular shape.

In Modification Example 4, the solid sample cell 600 is placed on the sample stage 102 when a liquid sample is analyzed as well as when a solid sample is analyzed. That is, it is not necessary to shape the sample stage 102 so that two different types of sample cells are placeable thereon. In addition, this enables repurposing of an apparatus included in a related-art X-ray fluorescence spectrometric system 100 to convey a sample cell. Accordingly, simplification of configuration and suppression of an increase in manufacturing cost are achieved.

### Reference Signs List

- 100: X-ray fluorescence spectrometric system
- 102: sample stage
- 104: rotation mechanism
- 106: X-ray source
- 108: detector
- 300: information processing apparatus
- 302: calculation unit
- 304: storage unit
- 306: display unit
- 308: input and output unit
- 310: internal bus
- 402: analysis module
- 404: speed control module
- 500: liquid sample cell
- 502: film
- 504: fin
- 506: outer member
- 508: inner member
- 600: solid sample cell
- 902: lid portion
- 1002: rectangular tube portion

## Claims

1. An X-ray fluorescence spectrometric system, comprising:
a sample stage on which a sample cell is to be placed and which has an opening for exposing a lower surface of the sample cell, the sample cell having a containing space in which a sample is to be contained;
a rotation mechanism configured to rotate the sample cell placed on the sample stage;
an X-ray source configured to irradiate the lower surface with X-rays, from under the sample stage, through the opening in the sample stage;
a detector configured to measure an intensity of fluorescent X-rays emitted from the sample; and
a speed control module configured to control a rotation speed of the rotation mechanism,
wherein the sample cell includes:
a liquid sample cell in which a liquid sample is to be contained, and which includes a portion in which a cross-section of the containing space parallel to the lower surface is other than a circle centered about a rotation axis of the sample cell; and
a solid sample cell configured to contain a solid sample, and
wherein the X-ray fluorescence spectrometric system is configured to operate in operation modes including:
an unstirred measurement mode in which the detector executes measurement during rotation of the rotation mechanism at a constant rotation speed under control of the speed control module; and
a stirred measurement mode including a stirring period in which the liquid sample is stirred through rotation of the rotation mechanism at a varying rotation speed which is caused by the speed control module, and a post-stirring measurement period in which the detector executes measurement after the liquid sample is stirred.

2. The X-ray fluorescence spectrometric system according to claim 1,
wherein the sample stage is designed so that the liquid sample cell and the solid sample cell are placeable thereon,
wherein, in the unstirred measurement mode, the solid sample cell is placed on the sample stage, and
wherein, in the stirred measurement mode, the liquid sample cell is placed on the sample stage.

3. The X-ray fluorescence spectrometric system according to claim 1 or 2,
wherein the containing space of the liquid sample cell has a substantially cylindrical shape, and
wherein the liquid sample cell includes one or more fins each having predetermined lengths in a radial direction of the containing space and a rotation axis direction.

4. The X-ray fluorescence spectrometric system according to claim 3,
wherein the liquid sample cell includes a cylindrical portion having an upper surface that is an opening, and a lid portion to be fitted into the opening, and
wherein each of the one or more fins is formed integrally with the lid portion.

5. The X-ray fluorescence spectrometric system according to claim 3,
wherein the liquid sample cell includes a cylindrical portion having an upper surface that is an opening, and
wherein each of the one or more fins is formed integrally with the cylindrical portion.

6. The X-ray fluorescence spectrometric system according to claim 3,
wherein the liquid sample cell includes a cylindrical portion having an upper surface that is an opening,
wherein the cylindrical portion and the one or more fins are formed separately from each other, and
wherein each of the one or more fins is fitted into the cylindrical portion.

7. The X-ray fluorescence spectrometric system according to claim 4, wherein the cylindrical portion and the one or more fins are formed from the same material.

8. The X-ray fluorescence spectrometric system according to claim 1 or 2, further comprising the liquid sample cell.

9. The X-ray fluorescence spectrometric system according to claim 1, wherein the speed control module is configured to instruct the rotation mechanism to discontinuously change the rotation speed in the stirring period.

10. The X-ray fluorescence spectrometric system according to claim 1 or 9, wherein the speed control module is configured to issue to the rotation mechanism, in the stirring period, an instruction to rotate in a forward direction for a predetermined length of time, and then an instruction to rotate in a reverse direction.

11. The X-ray fluorescence spectrometric system according to claim 1 or 9, wherein the speed control module is configured to issue an instruction to stop the rotation mechanism in the post-stirring measurement period.

12. The X-ray fluorescence spectrometric system according to claim 1 or 9, wherein the speed control module is configured to issue an instruction to rotate the rotation mechanism in the post-stirring measurement period.

13. The X-ray fluorescence spectrometric system according to claim 12, wherein the speed control module is configured to issue to the rotation mechanism, in the post-stirring measurement period, an instruction to rotate in a forward direction for a predetermined length of time, and then an instruction to rotate in a reverse direction.

14. A non-transitory computer-readable information storage medium having an X-ray fluorescence spectrometric program stored thereon, the X-ray fluorescence spectrometric program being executed by a computer used as an X-ray fluorescence spectrometric system,
the X-ray fluorescence spectrometric system including:
a sample stage on which a sample cell is to be placed and which has an opening for exposing a lower surface of the sample cell, the sample cell having a containing space in which a sample is to be contained;
a rotation mechanism configured to rotate the sample cell placed on the sample stage;
an X-ray source configured to irradiate the lower surface with X-rays, from under the sample stage, through the opening in the sample stage;
a detector configured to measure an intensity of fluorescent X-rays emitted from the sample; and
a speed control module configured to control a rotation speed of the rotation mechanism,
the sample cell including:
a liquid sample cell in which a liquid sample is to be contained, and which includes a portion in which a cross-section of the containing space parallel to the lower surface is other than a circle centered about a rotation axis of the sample cell; and
a solid sample cell configured to contain a solid sample,
the X-ray fluorescence spectrometric program causing the computer to execute operation modes including:
an unstirred measurement mode in which the detector executes measurement during rotation of the rotation mechanism at a constant rotation speed under control of the speed control module; and
a stirred measurement mode including a stirring period in which the liquid sample is stirred through rotation of the rotation mechanism at a varying rotation speed which is caused by the speed control module, and a post-stirring measurement period in which the detector executes measurement after the liquid sample is stirred.

15. The information storage medium according to claim 14,
wherein the stirred measurement mode includes the stirring period and the post-stirring measurement period alternatingly, and
wherein the X-ray fluorescence spectrometric program causes the computer to execute, when the stirred measurement mode is executed, the steps of:
measuring, using the detector, a fluorescent X-ray intensity in the post-stirring measurement period executed for an n-th time;
measuring, using the detector, a fluorescent X-ray intensity in the post-stirring measurement period executed for an (n+1)-th time; and
determining whether to set the stirring period to be executed for an (n+2)-th time, based on the fluorescent X-ray intensity measured in the post-stirring measurement period executed for the n-th time and the fluorescent X-ray intensity measured in the post-stirring measurement period executed for the (n+1)-th time.

16. The information storage medium according to claim 15, wherein the step of determining includes setting the stirring period to be executed for the (n+2)-th time when a difference between, or a ratio of, the fluorescent X-ray intensity measured in the post-stirring measurement period executed for the n-th time and the fluorescent X-ray intensity measured in the post-stirring measurement period executed for the (n+1)-th time is more than a predetermined value.

17. A liquid sample cell for use in the X-ray fluorescence spectrometric system of claim 1,
wherein the containing space of the liquid sample cell has a substantially cylindrical shape, and
wherein the liquid sample cell includes one or more fins each having predetermined lengths in a radial direction of the containing space and an axial direction.

18. The liquid sample cell according to claim 17,
wherein the liquid sample cell comprises a cylindrical portion having an upper surface that is an opening,
wherein the cylindrical portion and the one or more fins are formed separately from each other, and
wherein each of the one or more fins is fitted into the cylindrical portion.

19. The liquid sample cell according to claim 17 or 18, wherein the cylindrical portion and the one or more fins are formed from the same material.

20. An X-ray fluorescence spectrometric program to be executed by a computer used as an X-ray fluorescence spectrometric system,
the X-ray fluorescence spectrometric system including:
a sample stage on which a sample cell is to be placed and which has an opening for exposing a lower surface of the sample cell, the sample cell having a containing space in which a sample is to be contained;
a rotation mechanism configured to rotate the sample cell placed on the sample stage;
an X-ray source configured to irradiate the lower surface with X-rays, from under the sample stage, through the opening in the sample stage;
a detector configured to measure an intensity of fluorescent X-rays emitted from the sample; and
a speed control module configured to control a rotation speed of the rotation mechanism,
the sample cell including:
a liquid sample cell in which a liquid sample is to be contained, and which includes a portion in which a cross-section of the containing space parallel to the lower surface is other than a circle centered about a rotation axis of the sample cell; and
a solid sample cell configured to contain a solid sample,
the X-ray fluorescence spectrometric program causing the computer to execute operation modes including:
an unstirred measurement mode in which the detector executes measurement during rotation of the rotation mechanism at a constant rotation speed under control of the speed control module; and
a stirred measurement mode including a stirring period in which the liquid sample is stirred through rotation of the rotation mechanism at a varying rotation speed which is caused by the speed control module, and a post-stirring measurement period in which the detector executes measurement after the liquid sample is stirred.
